# EUROPEAN PATENT APPLICATION

(11) **EP 3 736 469 A1**
(43) Date of publication of application: **11.11.2020**
(21) Application number: 19173733.7
(22) Date of filing: 10.05.2019
(51) Int. Cl.: F16H 57/04, F03D 80/70, F16N 39/02

(54) **LUBRICATION SYSTEM FOR A GEARBOX AND WIND TURBINE**

(71) Applicant: Siemens Gamesa Renewable Energy A/S, 7330 Brande (DK)
(72) Inventor: Groenheden, Ebbe, 8700 Horsens (DK)
(74) Representative: Aspacher, Karl-Georg

(57) **Abstract**

A lubrication system for a multi-stage gearbox having at least a first gear stage (41, 42) and a second gear stage (43) is provided. The lubrication system includes a lubricant return line (15) configured to direct lubricant from the gearbox (40) to a temperature adjustment unit (20). The temperature adjustment unit (20) is configured to adjust the temperature of the lubricant and to give out a first lubricant stream at a first temperature and a second lubricant stream at a second temperature, wherein the second temperature is higher than the first temperature. The lubrication system further includes a first supply line (16) coupled to the temperature adjustment unit (20) and configured to provide the first lubricant stream to the first gear stage (41, 42) of the gearbox (40) and a second supply line (17) coupled to the temperature adjustment unit (20) and configured to provide the second lubricant stream to the second gear stage (43) of the gearbox (40). Furthermore, a gearbox system (50) including the gearbox (40) and the lubrication system (10) is provided. The gearbox system (50) can be included in a wind turbine (100).

## Description

### FIELD OF THE INVENTION

The present invention relates to a lubrication system for a multi-stage gearbox having at least a first gear stage and a second gear stage, to a respective gearbox system and to a wind turbine comprising such gearbox system. The invention further relates to a method of operating a lubrication system of a multi-stage gearbox.

### BACKGROUND

Several components of a wind turbine require lubrication for proper operation. Some of these components include an oil reservoir, which can for example be an oil sump, and a pump which pumps the oil from the reservoir to the components to be lubricated. A heat exchanger, in particular an oil cooler, can be provided in the flow circuit to cool the oil before supplying it to the component.

A typical example of such component is a gearbox. As a rotor of a wind turbine may turn relatively slowly, the main shaft of the rotor is coupled to a gearbox, which converts the slow, high torque rotation into a faster rotation that is applied to an electrical generator of the wind turbine. To provide the required increase in speed, the gear ratio (also termed speed ratio or transmission ratio) of the gearbox typically needs to lie in a range of 1:40 to 1:100. To achieve such gear ratios, the gearbox comprises several gear stages. A typical configuration of a wind turbine gearbox includes a first and a second planetary gear stage, followed by a helical gear stage. The pump of the lubrication system pumps the oil from the oil sump of the gearbox through the heat exchanger to the gear stages of the gearbox.

It is desirable to improve the lubrication of such gearbox. In particular, the lifetime of the different gear stages of such gearbox is dependent on the friction experienced by the gears, and friction furthermore results in friction losses, for example in the helical stage of such gearbox. It is desirable to reduce the friction in such gearbox and to increase the lifetime of the components of the gearbox. In particular, the helical gear stage, which runs at high speed, experiences significant friction losses.

### SUMMARY OF THE INVENTION

It is thus an object of the invention to mitigate at least some of the drawbacks outlined above and to improve the lubrication of a gearbox. It is in particular an object of the invention to increase the lifetime of components of a gearbox and to reduce friction losses.

This object is achieved by the features of the independent claims. The dependent claims describe the embodiments of the invention.

According to an embodiment of the invention, a lubrication system for a multi-stage gearbox having at least a first gear stage and a second gear stage is provided. The lubrication system comprises a lubricant return line configured to direct lubricant from the gearbox to a temperature adjustment unit. It further comprises a temperature adjustment unit which is configured to adjust the temperature of the lubricant and to give out a first lubricant stream at a first temperature and a second lubricant stream at a second temperature. The second temperature is higher than the first temperature. The first supply line is coupled, in particular fluidly connected, to the temperature adjustment unit and is configured to provide the first lubricant stream to the first gear stage of the gearbox. A second supply line is coupled, in particular fluidly connected, to the temperature adjustment unit and is configured to provide the second lubricant stream to the second gear stage of the gearbox.

By means of such lubrication system, it becomes possibly to provide the two gear stages of the gearbox with lubricant at two different temperatures. The temperature of the lubricant can be adapted to the particular requirements of the respective gear stage. The first gear stage may for example be configured to run at a lower speed than the second gear stage. The gear stage running at a higher speed can be provided with a lubricant having a higher temperature and thus a lower viscosity, so that lubrication of the respective gear stage can be improved and can be optimized. The first gear stage, which may run at a lower speed and thus at higher torques, can be provided with a cooler and thus more viscous lubricant, whereby a thicker viscous oil film can form on the components (e.g. the gears) and thereby improve lubrication of the first gear stage. The first gear stage can for example be a planetary gear stage and the second gear stage can be a helical gear stage.

By providing a lubricant at a lower temperature to the planetary gear stage, the lifetime thereof can be extended. By providing the lubricant at a higher temperature to the helical gear stage, friction losses can be reduced. Furthermore, as the viscosity of the lubricant can be adjusted independently for the two streams by using the temperature adjustment unit, a lubricant having a higher viscosity can be employed, thus leading to improved lubrication of the planetary gear stage while maintaining a high performance of the helical gear stage.

The temperature adjustment unit may for example be configured to derive from a lubricant stream received from the lubricant return line a higher temperature lubricant stream and a lower temperature lubricant stream, and to provide a mixing between the higher temperature lubricant stream and the lower temperature lubricant stream at different mixing ratios to derive the first lubricant stream and the second lubricant stream.

In an embodiment, the temperature adjustment unit comprises a heat exchanger configured to convert a higher temperature lubricant stream received from the return line into a lower temperature lubricant stream. Such heat exchanger allows the temperature adjustment unit to control the temperature of the first and second lubricant streams within the desired limits.

The temperature adjustment unit may comprise a first mixing unit that is connected to receive at least part of the lower temperature lubricant stream from the heat exchanger and to receive at least part of the higher temperature lubricant stream from the return line. The first mixing unit may be configured to output the first lubricant stream as a mixture between the received lubricant streams. The temperature and thus the viscosity of the first lubricant stream that is provided to the first gear stage can thus be adjusted efficiently. The temperature adjustment unit may in particular be configured to control the temperature of the first lubricant stream by controlling the respective mixing ratio.

It is also conceivable that the first mixing unit operates with a predetermined mixing ratio, and the temperature adjustment unit controls the temperature of the first lubricant stream by controlling the heat exchanger, for example by controlling the flow of cooling medium (e.g. air) through the heat exchanger, e.g. by using a frequency-controlled fan.

The first mixing unit is optional, and in some configurations, the first lubricant stream may consist of at least part of the lower temperature lubricant stream from the heat exchanger, i.e. a fraction of the output of the heat exchanger is directly provided as the second lubricant stream. The temperature adjustment unit can be configured to control the temperature of the first lubricant stream by controlling the amount of cooling provided by the heat exchanger.

The temperature adjustment unit may comprise a bypass line connected to the return line to provide a higher temperature lubricant stream that bypasses the heat exchanger. The first mixing unit may receive the higher temperature lubricant stream from such bypass line. In other configurations, it may receive the higher temperature lubricant stream from a different line, such as from the second supply line.

The temperature adjustment unit may further comprise a second mixing unit that is connected to receive at least part of the lower temperature lubricant stream from the heat exchanger and to receive at least part of the higher temperature lubricant stream from the return line. The second mixing unit is configured to output the second lubricant stream as a mixture between the received lubricant streams. The temperature adjustment unit may thus efficiently control the temperature and thus the viscosity of the second lubricant stream. In particular, the temperature adjustment unit may be configured to control the temperature of the second lubricant stream by controlling the respective mixing ratio. It should be clear that in other configurations, the mixing ratio of the second mixing unit may be fixed and that temperature control may again occur by controlling the heat exchanger, for example by controlling an airflow therethrough by a respective frequency-controllable fan. The term 'second' mixing unit does not imply that two mixing units must be present, it rather refers to the fact that this mixing unit provides the second lubricant stream. The second mixing unit can be the only mixing unit of the lubrication system.

The temperature adjustment unit can comprise a bypass line connected to the return line to provide a higher temperature lubricant stream that bypasses the heat exchanger, and the second mixing unit may receive the part of the higher temperature lubricant stream from such bypass line.

The second mixing unit may be connected to the first supply line to receive the part of the lower temperature lubricant stream via the first supply line. In other configurations, the second mixing unit may be connected to an output of the heat exchanger to directly receive the part of the lower temperature lubricant stream from the heat exchanger.

In some configurations, a first bypass line and a second bypass line may branch off from the return line to provide respective partial higher temperature lubricant streams to the first mixing unit and the second mixing unit. In other configurations, a common bypass line that branches into the first and second mixing units may be used.

The first mixing unit and/or the second mixing unit may comprise a three-way valve to provide the respective mixing between the lubricant streams received by the respective mixing unit. Furthermore, such three-way valve may provide controllability of the respective mixing ratio. The three-way valve may for example be preset or may be controlled by a control unit of the lubrication system, e.g. by a thermostat or an actuator.

Preferably, the second mixing unit comprises a control valve that is controllable, e.g. by means of an actuator, to control the lower temperature lubricant stream received (directly or indirectly) from the heat exchanger or the higher temperature lubricant stream received via the bypass line. A single control valve for controlling one of these lubricant streams received by the second mixing unit can be provided, or two such control valves, one for each of the received lubricant streams, can be provided. The flow rate of one or both streams can be controlled efficiently using such control valve(s).

By means of the respective mixing unit, in particular the control valve or three-way valve, the mixing ratio between the received lubricant streams can be adjusted efficiently so as to adjust the temperature of the output lubricant stream.

That a mixing unit receives at least part of a respective lubricant stream means that it does not need to receive the whole stream, but may receive only a fraction of the respective lubricant stream, which may also be mixed with a further stream. As an example, the second mixing unit may receive a fraction of the output of the heat exchanger directly, or may receive a fraction of the output of the heat exchanger via the first mixing unit, in which this fraction is mixed with a fraction of the higher temperature lubricant stream, i.e. the second mixing unit may receive such mixture.

The temperature adjustment unit may furthermore be configured to control the temperature of the low temperature lubricant stream by controlling the amount of cooling provided by the heat exchanger. As an example, the mixing ratio of the first and second mixing units may be predefined, and by controlling the heat exchanger, the absolute temperature of the first and second fluid streams can be adjusted. Such adjustment may depend on the prevailing conditions, such as ambient temperature, operating speed of the gearbox and the like. An efficient control of the temperature of the first and second lubricant streams can thereby be achieved.

In an embodiment, the lubrication system furthermore comprises a pump configured to pump lubricant from the gearbox to the temperature adjustment unit. Circulation of the lubricant via the first and second supply lines may thus be achieved by a single pump. In other embodiments, additional pumps may be provided. The lubrication system can furthermore comprise a filter to filter the lubricant. Preferably, such filter is provided between the pump and the temperature adjustment unit.

In an embodiment, the lubrication system furthermore comprises a control unit that is configured to control the temperature of the first lubricant stream and the temperature of the second lubricant stream by controlling the amount of cooling provided by the heat exchanger, by controlling the first mixing unit, and/or by controlling the second mixing unit. The control unit can be configured to control the temperature of the first lubricant stream such that the lubricant stream has a viscosity predetermined for the first gear stage, and to control the temperature of the second lubricant stream such that the second lubricant stream has a viscosity predetermined for the second gear stage. Both gear stages may thus be operated with lubricant having the optimum viscosity for the respective gear stage.

The control unit may for example obtain, in particular measure, the temperature of the higher temperature lubricant provided via the return line and may obtain or measure the temperature of the lower temperature lubricant provided by the heat exchanger. Based on these temperatures, the control unit may control the first mixing unit, the second mixing unit and/or the heat exchanger to achieve the predetermined temperatures, for example by controlling a respective control valve, three-way valve or heat exchanger fan. For example, the both mixing units may be present and may be controlled to adjust the temperature of the first and second lubricant streams. In another example, only the second mixing unit may be present. The temperature of the first lubricant stream can be controlled by controlling the heat exchanger and the temperature of the second lubricant stream can be controlled by controlling the second mixing unit, e.g. the control valve.

Additionally or alternatively, the control unit may obtain, in particular measure, ambient temperature and speed of the gearbox and may use the respective quantities in controlling the temperature of the first and second lubricant streams. For example, at higher ambient temperature and/or at higher operating speed of the gearbox, the control unit may increase the amount of cooling provided by the heat exchanger, e.g. by increasing the speed of the fan.

The lubrication system may comprise temperature sensors to take respective measurements. It may comprise a first temperature sensor for measuring the temperature of the first lubricant stream and a second temperature sensor for measuring the temperature of the second lubricant stream. The control unit may employ feedback control to control the temperature of the first and second lubricant streams based on such measurements using any of the configurations described herein. The lubrication system may additionally or alternatively comprise temperature sensors to measure the temperature of the higher/lower temperature lubricant streams, of the ambient temperature, and/or of the gearbox.

The first and second temperatures depend on the particular application, in particular on the type of gearbox and gear stages employed, on the operating speed of the gearbox and on the lubricant employed. The first temperature can for example lie within a range of 30 to 45 °C, preferably 35 to 40°C, e.g. when the first gear stage is a planetary stage. The second temperature can for example lie within a range of 45 to 80 °C, preferably 50 to 70°C, e.g. when the second gear stage is a helical stage.

According to a further embodiment of the present invention, a gearbox system comprising a multi-stage gearbox having at least a first gear stage and a second gear stage and a lubrication system that has any of the configurations described herein is provided. The first supply line of the lubrication system is connected to the gearbox such that the first lubricant stream is provided to the first gear stage of the gearbox, and the second supply line of the lubrication system is connected to the gearbox such that the second lubricant stream is provided to the second gear stage of the gearbox. With such gearbox system, advantages similar to the ones outlined further above may be achieved.

The first gear stage of the gearbox may be a planetary gear stage, and the second gear stage of the gearbox may be a helical gear stage.

According to a further embodiment of the present invention, a wind turbine comprising a gearbox system in any of the above outlined configurations is provided. The gearbox is coupled to a main rotor shaft of the wind turbine.

An embodiment of the present invention furthermore provides a method of operating a lubrication system of a multi-stage gearbox having at least a first gear stage and a second gear stage. The method comprises directing lubricant from the gearbox to a temperature adjustment unit via a lubricant return line; adjusting the temperature of the lubricant by the temperature adjustment unit; giving out a first lubricant stream at a first temperature from the temperature adjustment unit; giving out a second lubricant stream at a second temperature from the temperature adjustment unit, wherein the second temperature is higher than the first temperature; supplying the first lubricant stream to the first gear stage of the gearbox; and supplying the second lubricant stream to the second gear stage of the gearbox. By means of such method, advantages similar to the ones outlined further above may be achieved. It should be clear that the method may comprise any method steps described herein with respect to the lubrication system or the gearbox system. Furthermore, the method may be performed with the lubrication system or the gearbox system in any of the configurations described herein.

It should be clear that the above-described embodiments are not limited to two gear stages of the gearbox. Rather, the gearbox may have 2, 3, 4, 5, or even more gear stages. A gear stage of a gearbox is generally a set of gears that provides a certain reduction or increase in rotational speed, such as a planetary gear stage that can comprise a sun gear, planetary gears and an outer ring gear. The temperature adjustment unit may be configured to provide a separate lubricant stream at a predefined temperature to each gear stage of the gearbox, or may provide two or more stages of the gearbox with the same lubricant stream.

For example, the gearbox may have three gear stages, wherein two gear stages (e.g. planetary stages) are provided with the same lubricant stream (e.g. the first lubricant stream) and one gear stage (e.g. helical stage) is provided with a different (e.g. the second) lubricant stream. In another configuration, each of the three gear stages is provided with a respective lubricant stream, wherein a first slower planetary stage is provided with a first lubricant stream having a lower first temperature, a second faster planetary gear stage is provided with a second lubricant stream having a second temperature that is higher than the first temperature, and a third helical stage is provided with a third lubricant stream having a third temperature that is higher than the second temperature. The temperature adjustment unit can include a third mixing unit that provides the third lubricant stream as a mixture between the higher temperature and the lower temperature lubricant streams. An optimized lubrication can thus be provided for each stage of such gearbox.

It is to be understood that the features mentioned above and those yet to be explained below can be used not only in the respective combinations indicated, but also in other combinations or in isolation, without leaving the scope of the present invention.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine including a gearbox and a lubrication system according to an embodiment of the invention.
Fig. 2 is a schematic drawing showing a lubrication system and a gearbox system according to an embodiment of the invention.
Fig. 3 is a schematic drawing showing a lubrication system and a gearbox system according to an embodiment of the invention.
Fig. 4 is a schematic drawing showing a lubrication system and a gearbox system according to an embodiment of the invention.
Fig. 5 is a schematic drawing showing a flow diagram that illustrates a method according to an embodiment of the invention.

### DETAILLED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. Unless noted to the contrary, the connections and couplings described herein are fluid connections and fluid couplings, in particular liquid connections and liquid couplings. It should be clear that fluid coupling may comprise intervening elements, such as further valves, filters, sensors, junctions and the like. A fluid connection is preferably a direct flow connection, which may comprise an element that does not change the composition of the fluid stream, such as a valve or constriction. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

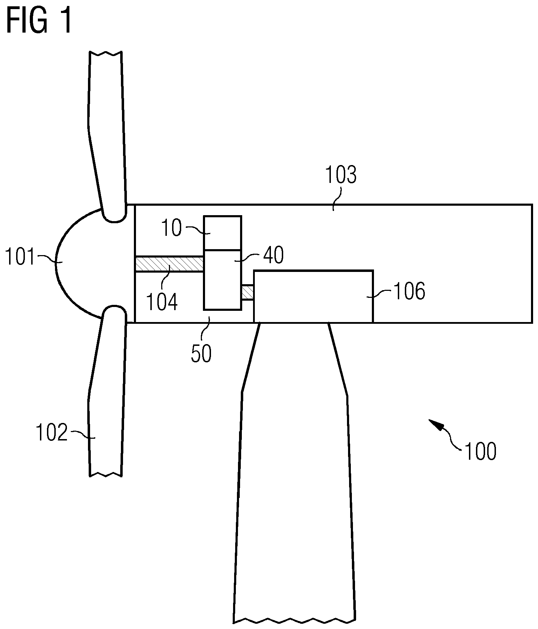

Fig. 1 shows a wind turbine 100 according to an embodiment of the present invention that includes a rotor 101 having rotor blades 102. Rotation is transmitted via the main shaft 104 and the gearbox 40 to the generator 106. Gearbox 40 converts the slower rotational speed of the rotor 101 into a higher rotational speed so that generator 106 can operate at optimum rotational speed or at the rotational speed required by the power grid. Gearbox 40 forms part of a gearbox system 50 that furthermore includes a lubrication system 10. These components are disposed in the nacelle 103 of the wind turbine 100.

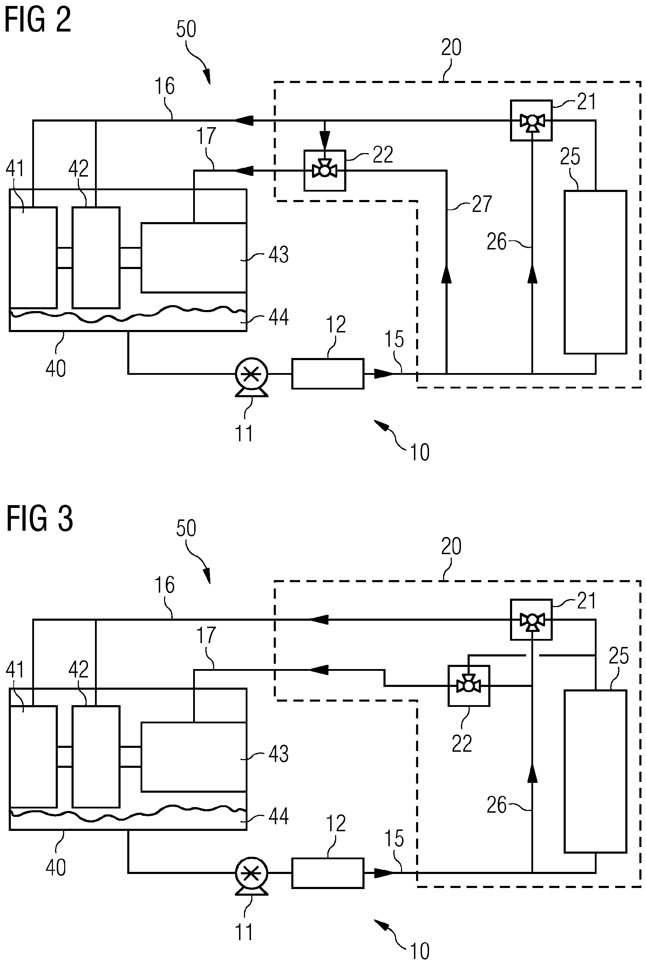

Fig. 2 shows an exemplary embodiment of the lubrication system 10 and the gearbox system 50. In the example of Fig. 2, the gearbox 40 includes a planetary gear stage 41, a further planetary gear stage 42 and a helical gear stage 43. It should be clear that any of these gear stages may be designated as first and second gear stages, and that the gearbox 40 may include fewer or more gear stages. It may for example include two, three, four, five or even more gear stages. A gear stage generally provides conversion of a first rotational speed to a second rotational speed, by providing a respective gear reduction (increasing or decreasing the rotational speed, depending on the gear ratio).

The gearbox 40 is provided with a lubricant by the lubrication system 10. Lubricant collects in the lubricant sump 44 of the gearbox 40, which may be regarded as a reservoir for the lubricant. The lubricant has a predefined viscosity that is temperature dependent, it can in particular be an oil.

The lubrication system 10 includes a return line 15 by means of which lubricant that has collected in the sump 44 is provided to a temperature adjustment unit 20. The return line 15 can include a pump 11 that pumps the lubricant and a filter 12 that filters the lubricant and for example removes particles that may have formed due to wear and abrasion. As heat is generated by gearbox 40 during operation, a lubricant stream having a relatively high temperature is provided via the return line 15. The temperature adjustment unit 20 includes a heat exchanger 25 to which the return line 15 is connected. The higher temperature lubricant stream flows through the heat exchanger 25 and thereby transfers thermal energy to a cooling medium, which may for example be air that flows through the heat exchanger 25. The air may be driven by a fan, the rotational speed of which can be adjusted to adjust the amount of cooling provided by heat exchanger 25 (frequency-controlled fan). The temperature of the lubricant is thus lowered by heat exchanger 25, so that the heat exchanger 25 gives out a lower temperature lubricant stream.

In the example of Fig. 2, a first mixing unit 21 is provided that is connected via a first bypass line 26 to the return line 15 and that is furthermore connected to the output of the heat exchanger 25. The first mixing unit 21 provides mixing between the higher temperature lubricant stream received from the bypass line 26 and the lower temperature lubricant stream received from the heat exchanger 25. The mixed lubricant stream is then given out via a first supply line 16 as a first lubricant stream. As can be seen, via the first mixing unit 21, the mixing ratio between high and low temperature lubricant streams can be adjusted. Thereby, the temperature and thus the viscosity of the first lubricant stream can be adjusted. The first supply line 16 is connected to the gearbox 40 such that the first lubricant stream is provided to the planetary gear stages 41 and 42. The temperature can for example be adjusted to be relatively low, so that the viscosity is increased and a thick viscous oil film can form on the planetary gears of stages 41, 42. This can improve the lifetime of the planetary gear stages, since these experience relatively high torques and thus benefit from a thicker viscous oil film.

The temperature adjustment unit 20 furthermore includes a second mixing unit 22 that is connected by means of a second bypass line 27 to the return line 15. It is further connected to the first supply line 16. The second mixing unit 22 receives a higher temperature lubricant stream from the return line 15 via the second bypass line 27, i.e. it receives a fraction of the lubricant stream that is provided by return line 15. It further receives a fraction of the first lubricant stream provided by the first mixing unit 21, which comprises a fraction of the lower temperature lubricant stream output by the heat exchanger 25. The second mixing unit 22 mixes these two fluid streams and gives out a second lubricant stream via a second supply line 17. The second supply line 17 connects the second mixing device 22 to the gearbox 40 such that the second lubricant stream is provided to the helical gear stage 43.

As the first lubricant stream provided on line 16 has a relatively low temperature, the mixing unit 22 can adjust the temperature of the higher temperature lubricant stream received via second bypass line 27 such that a viscosity of the lubricant is achieved that is optimal for operation of the helical gear stage 43. In particular, the second mixing unit 22 is configured to adjust the temperature of the second lubricant stream to be relatively high, so that a thinner and less viscous lubricant is provided to the helical stage 43 which runs at high speed. Friction losses in the helical stage 43 can thus be reduced and the lifetime can be increased. These positive effects can even be achieved when an oil having a relatively high viscosity (high viscous oil grade) is used as lubricant, since the temperature adjustment unit 20 can reduce the viscosity by increasing the temperature so that a good lubrication performance is achieved for the helical gear stage 43.

The first mixing unit 21, the second mixing unit 22, or both can be implemented as three-way valves. The respective mixing units, in particular the mixing valves, may be controllable by a control unit to adjust the temperature of the fluid streams given out by temperature adjustment unit 20, in particular so as to achieve a predetermined viscosity of the respective fluid stream. It should be clear that other implementations of the first and second mixing units 21, 22 are conceivable, such as providing separate valves for controlling the flow of fluids into the respective mixing unit and providing a junction, such as a T- or a Y-junction to mix the lubricant streams.

By means of the lubrication system 10, it becomes possible to control the optimal lubrication temperature for both, the planetary stages 41, 42 and the helical stage 43. It should be clear that an additional mixing unit, in particular an additional three-way valve, may be added to the temperature adjustment unit 20 so that a separate temperature control can be provided for each of the three gear stages 41, 42, 43. In particular, the torque/speed of the gear stages may be different, even though they employ a similar gearing mechanism, so that each gear stage may have an optimal lubricant viscosity and thus lubricant temperature at which the lubricant can be supplied to the respective gear stage. Such third mixing unit may directly mix the higher and lower temperature lubricant streams, it may mix the first lubricant stream with the higher temperature lubricant stream, or it may mix the second lubricant stream with the lower temperature lubricant stream. Other configurations are certainly conceivable, such as mixing of the first and second lubricant streams by a third mixing unit. An optimum lubrication may thus be provided for each gear stage in dependence on the speed and configuration of the respective gear stage.

In some configurations, the mixing ratio of the first and/or second mixing unit 21, 22 may be fixed and preset, so as to achieve a predetermined temperature of the first and second lubricant streams at predetermined operating conditions. The amount of cooling provided by the heat exchanger 25 may then be adjusted, for example to account for changes of the operating conditions, such as ambient temperature, operational speed/temperature of gearbox 40 and the like. A respective control unit that provides such control can be comprised in the lubrication system 10. Additionally or alternatively, the flow velocity of the lubricant can be controlled by controlling the pump 11 to achieve the desired lubricant temperatures.

In some configurations, a control unit can be provided that controls the mixing ratio of the respective mixing units. In a simple implementation, such control unit can include thermostats that regulate valves of the mixing units, such as the three way valves, to maintain the temperature of the first and second lubricant streams within respective predefined temperature ranges.

In other implementations, the lubrication system 10 may comprise a control unit that has stored predefined values of viscosity for the respective gear stages 41/42 and 43, at which an optimum lubrication can be achieved. The control unit may furthermore be configured to derive from a temperature/viscosity relation of the lubricant a lubricant temperature for the respective gear stages at which the respective predefined viscosity is achieved. The control unit may then control the first and second mixing units 21, 22 and/or the heat exchanger 25 to achieve the desired lubricant temperatures for the lubricant stream supplied to the respective gear stage. The control unit may for example adjust the mixing ratio of the three-way valves of the first and second mixing units 21, 22. The control unit may for example measure the temperature of the first and second fluid streams and adjust the mixing ratio such that the desired lubricant temperature is achieved, or it may measure the temperature of the higher temperature stream provided via return line 15 and the lower temperature stream provided via heat exchanger 25 and derive a mixing ratio therefrom that is required to achieve the desired lubricant temperature. The lubrication system 10 may comprise respective temperature sensors.

It should be clear that such control unit may control further mixing devices, for example when providing separate fluid streams to three or more gear stages of the gearbox 40. It should further be clear that the gearbox 40 may only comprise two gear stages.

Fig. 3 shows a further exemplary configuration of the lubrication system 10 and the gearbox system 50. As Fig. 3 is a modification of the embodiment of Fig. 2, the above explanations are equally applicable to Fig. 3, and the explanations below will focus on the differences. In the example of Fig. 3, the second mixing unit 22 does not receive the first fluid stream from the first mixing unit 21 as a lower temperature fluid stream, but directly receives a fraction of the lower temperature lubricant stream output by heat exchanger 25. The second mixing unit 22 may thus control the temperature over a wider range, and may only require a relatively small flow of the lower temperature lubricant stream to adjust the temperature as desired. Furthermore, only a single bypass line 26 is provided which branches off to supply the higher temperature fluid stream to both, the first and second mixing units 21, 22. It should be clear that either one or both of these modifications may be provided, i.e. the configuration of Fig. 3 may also include two bypass lines 26, 27, or the second mixing unit 22 may receive the first fluid stream from the first mixing unit 21.

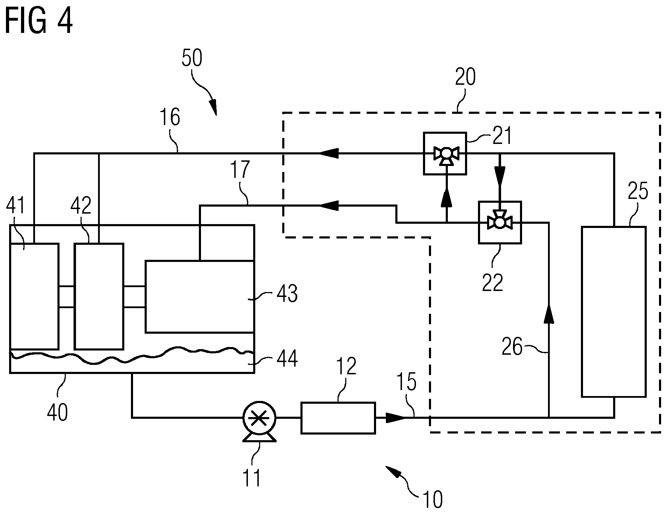

In the embodiment of Fig. 4, a further modification is shown, so that the above explanations provided with respect to Fig. 2 also apply to the embodiment of Fig. 4. In the embodiment of Fig. 4, the second mixing unit 22 again receives directly the lower temperature lubricant stream from the heat exchanger 25. Furthermore, a single bypass line 26 is provided that connects the return line 15 to the second mixing unit 22. The first mixing unit 21 is connected to the heat exchanger 25 to receive the low temperature lubricant stream. It is furthermore connected to the second supply line 17 to receive the second lubricant stream that is given out by the second mixing unit 22. As the planetary gear stages 41, 42 require the lubricant at only relatively low temperatures, the elevated temperature of the second lubricant stream may be sufficient for adjusting the temperature of the first lubricant stream to be optimal for the planetary gear stages.

Furthermore, as outlined above, the amount of cooling provided by heat exchanger 25 can be controlled and/or the pump 11 can be controlled to adjust the temperature of the lower temperature lubricant stream, and thus of the first and second lubricant streams.

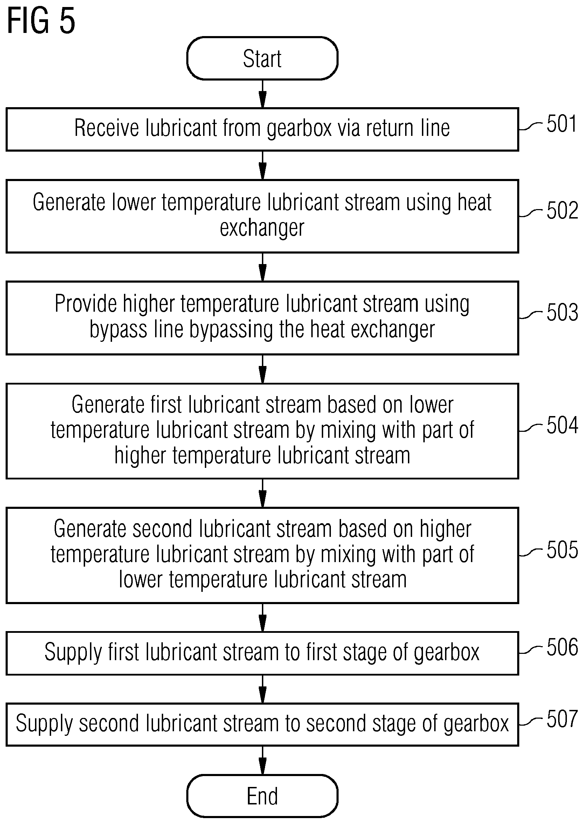

Fig. 5 shows a flow diagram illustrating a method according to an embodiment. The method may be performed by the lubrication system and the gearbox system in any of the above outlined configurations. In step 501, lubricant is received from the gearbox by the temperature adjustment unit 20 via the return line 15. In step 502, a lower temperature lubricant stream is generated by using the heat exchanger 25. A higher temperature lubricant stream is furthermore provided in step 503 by using a bypass line that bypasses the heat exchanger, such as bypass line 26 or 27. In step 504, the first lubricant stream is generated based on the lower temperature lubricant stream by mixing it with a fraction of the higher temperature lubricant stream, which can be provided directly or indirectly (i.e. via a further mixing unit, such as shown in Fig. 4).

In step 505, the second lubricant stream is generated based on the higher temperature lubricant stream by mixing with a part of the lower temperature lubricant stream (which again may be provided directly to the second mixing unit, as shown in Figs. 3 and 4, or may be provided indirectly, as shown in Fig. 2).

The first lubricant stream is supplied to the first stage of the gearbox (e.g. planetary stages 41 and 42) in step 506. The second lubricant stream is supplied to the second stage of the gearbox (e.g. helical stage 43) in step 507. The stages of the gearbox can thus be cooled efficiently with a lubricant having a temperature and viscosity that is optimized for the respective gear stage.

It should be clear that further configurations of the lubrication system 10 are conceivable. Besides the connections shown in Figs. 2 to 4, further configurations are possible which provide the first and second mixing units 21, 22 with lubricant streams that allow them to provide a mixture having an optimal temperature. Further, as mentioned above, further mixing units can be provided to output additional lubricant streams at different temperatures by the temperature adjustment unit 20. Preferably, the first mixing unit 21 is directly connected to the heat exchanger to directly receive the lower temperature lubricant stream, and the second mixing unit 22 is directly connected to the return line 15 to directly receive the higher temperature lubricant stream via a respective bypass line.

The lubrication system 10 and the gearbox system 50 are described herein with respect to the use in a wind turbine. As the gearbox of a wind turbine is generally equipped with several gear stages, such application of the lubrication system is particularly beneficial. Even so, other applications of the lubrication system 10 and of the gearbox system 50 are certainly conceivable, for example for gearboxes in other industrial applications.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A lubrication system for a multi-stage gearbox having at least a first gear stage (41, 42) and a second gear stage (43), comprising:
- a lubricant return line (15) configured to direct lubricant from the gearbox (40) to a temperature adjustment unit (20);
- the temperature adjustment unit (20) configured to adjust the temperature of the lubricant and to give out a first lubricant stream at a first temperature and a second lubricant stream at a second temperature, wherein the second temperature is higher than the first temperature;
- a first supply line (16) coupled to the temperature adjustment unit (20) and configured to provide the first lubricant stream to the first gear stage (41, 42) of the gearbox (40); and
- a second supply line (17) coupled to the temperature adjustment unit (20) and configured to provide the second lubricant stream to the second gear stage (43) of the gearbox (40).

2. The lubrication system of claim 1, wherein the temperature adjustment unit (20) comprises a heat exchanger (25) configured to convert a higher temperature lubricant stream received from the return line (15) into a lower temperature lubricant stream.

3. The lubrication system of claim 2, wherein the temperature adjustment unit (20) comprises a first mixing unit (21) that is connected to receive at least part of the lower temperature lubricant stream from the heat exchanger (25) and to receive at least part of the higher temperature lubricant stream from the return line (15) and that is configured to output the first lubricant stream as a mixture between the received lubricant streams.

4. The lubrication system of claim 3, wherein the temperature adjustment unit (20) comprises a bypass line (26) connected to the return line (15) to provide a higher temperature lubricant stream that bypasses the heat exchanger (25), wherein the first mixing unit (21) receives the at least part of the higher temperature lubricant stream from the bypass line (26) .

5. The lubrication system of any of claims 2-4, wherein the temperature adjustment unit (20) further comprises a second mixing unit (22) that is connected to receive at least part of the lower temperature lubricant stream from the heat exchanger (25) and to receive at least part of the higher temperature lubricant stream from the return line (15) and that is configured to output the second lubricant stream as a mixture between the received lubricant streams.

6. The lubrication system of claim 5, wherein the temperature adjustment unit (20) comprises a bypass line (26, 27) connected to the return line (15) to provide a higher temperatures lubricant stream that bypasses the heat exchanger (25), and wherein the second mixing unit (22) receives the at least part of the higher temperature lubricant stream from the bypass line (26, 27).

7. The lubrication system of claim 5 or 6, wherein the second mixing unit (22) is connected to the first supply line (16) to receive the part of the lower temperature lubricant stream via the first supply line.

8. The lubrication system of any of the preceding claims and of claims 5 and 7, wherein the temperature adjustment unit (20) comprises the bypass line connected to the first mixing unit (21) as a first bypass line (26) and comprises the bypass line connected to the second mixing unit (22) as a second bypass line (27).

9. The lubrication system of any of the claims and of claim 3 or 8, wherein the first mixing unit (21) and/or the second mixing unit (22) comprises a three way valve to provide the respective mixing.

10. The lubrication system of any of claims 2-9, wherein the temperature adjustment unit (20) is further configured to control the temperature of the low temperature lubricant stream by controlling the amount of cooling provided by the heat exchanger (25).

11. The lubrication system of any of the preceding claims, further comprising a pump (11) configured to pump lubricant from the gearbox (40) to the temperature adjustment unit (20) .

12. A gearbox system, comprising:
- a multi-stage gearbox (40) having at least a first gear stage (41, 42) and a second gear stage (43); and
- a lubrication system (10) according to any of the preceding claims,
wherein the first supply line (16) of the lubrication system (10) is connected to the gearbox (40) such that the first lubricant stream is provided to the first gear stage (41, 42) of the gearbox (40), and the second supply line (17) of the lubrication system (10) is connected to the gearbox (40) such that the second lubricant stream is provided to the second gear stage (43) of the gearbox (40).

13. The gearbox system of claim 12, wherein the first gear stage (41, 42) of the gearbox (40) is a planetary gear stage and wherein the second gear stage (43) of the gearbox (40) is a helical gear stage.

14. A wind turbine comprising a gearbox system (50) according to claim 12 or 13, wherein the gearbox (40) of the gearbox system (50) is coupled to a main rotor shaft (104) of the wind turbine (100).

15. A method of operating a lubrication system (10) of a multi-stage gearbox (40) having at least a first gear stage (41, 42) and a second gear stage (43), the method comprising:
- directing lubricant from the gearbox (40) to a temperature adjustment unit (20) via a lubricant return line (15) ;
- adjusting the temperature of the lubricant by the temperature adjustment unit (20);
- giving out a first lubricant stream at a first temperature from the temperature adjustment unit (20);
- giving out a second lubricant stream at a second temperature from the temperature adjustment unit (20), wherein the second temperature is higher than the first temperature;
- supplying the first lubricant stream to the first gear stage (41, 42) of the gearbox (40); and
- supplying the second lubricant stream to the second gear stage (43) of the gearbox (40).
